# EUROPEAN PATENT APPLICATION

(11) **EP 4 660 501 A1**
(43) Date of publication of application: **10.12.2025**
(21) Application number: 25175878.5
(22) Date of filing: 12.05.2025
(51) Int. Cl.: F16L 11/08

(54) **HIGH-PRESSURE HOSE**

(30) Priority: 06.06.2024 US 202418735489
(71) Applicant: Zhejiang Tianti Rubber & Plastic Technology Co., Ltd., Taizhou, Zhejiang 317200 (CN)
(72) Inventor: Dai, Weiqiang, Taizhou, Zhejiang, 317200 (CN)
(74) Representative: Lang, Christian

(57) **Abstract**

A high-pressure hose is provided, including: an inner tube, a first braided layer and a second braided layer. The inner tube defines an axial direction and a circumferential direction. The first braided layer includes a plurality of first braiding yarns and a plurality of first imaginary axes. Each of said first imaginary axes is passed through a plurality of first intersections of the plurality of first braiding yarns. The second braided layer is sleeved around the first braided layer and includes a plurality of second braiding yarns and a plurality of second imaginary axes. Each of said second imaginary axes is passed through a plurality of second intersections of the plurality of second braiding yarns. The plurality of first imaginary axes are at least partially misaligned with the plurality of second imaginary axes in a radial direction of the inner tube.

## Description

### BACKGROUND OF THE INVENTION

### Field of the Invention

The present invention relates to a high-pressure hose.

### Description of the Prior Art

There are many different types of hoses, such as air hose, water hose, industrial hose, etc., and the hoses may be made of different types of materials to meet different using requirements. Take the water hose as an example; the water hose generally needs to have aging resistance, anti-corrosion properties, as well as being flexible and resistant to water pressure.

However, a conventional hose is made of polyvinyl chloride or rubber, which is heavy and is unfriendly to the environment. Moreover, the conventional hose is easy to become brittle or sticky and is not durable to use. To reinforce the structural strength of the hose, layers made by metal, plastic or fibers materials have to be connected with one another by adhesive materials and sleeved around the hose, which may reduce the flexibility of the hose and cause the layers to be separated during use.

The present invention is, therefore, arisen to obviate or at least mitigate the above-mentioned disadvantages.

### SUMMARY OF THE INVENTION

The main object of the present invention is to provide a high-pressure hose, which provides good pressure resistance, good flexibility and good wear-resistant.

To achieve the above and other objects, the present invention provides a high-pressure hose, including: an inner tube, a first braided layer and a second braided layer. The inner tube defines an axial direction and a circumferential direction around the axial direction. The first braided layer is sleeved around the inner tube and includes a plurality of first braiding yarns and a plurality of first imaginary axes separately arranged in the circumferential direction. Each of the plurality of first imaginary axes is passed through a plurality of first intersections of the plurality of first braiding yarns. The second braided layer is sleeved around the first braided layer and includes a plurality of second braiding yarns and a plurality of second imaginary axes separately arranged in the circumferential direction. Each of the plurality of second imaginary axes is passed through a plurality of second intersections of the plurality of second braiding yarns. The plurality of first imaginary axes are at least partially misaligned with the plurality of second imaginary axes in a radial direction of the inner tube.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a preferable embodiment of the present invention;
Fig. 2 is a partial breakdown drawing of a preferable embodiment of the present invention;
Fig. 3 is a partial enlargement of a first braided layer and a second braided layer according to a preferable embodiment of the present invention; and
Fig. 4 is a partial cross-sectional view of a preferable embodiment of the present invention.

### DETAILED DESCRIPTION OF THE PREFERRED EMBODIMENTS

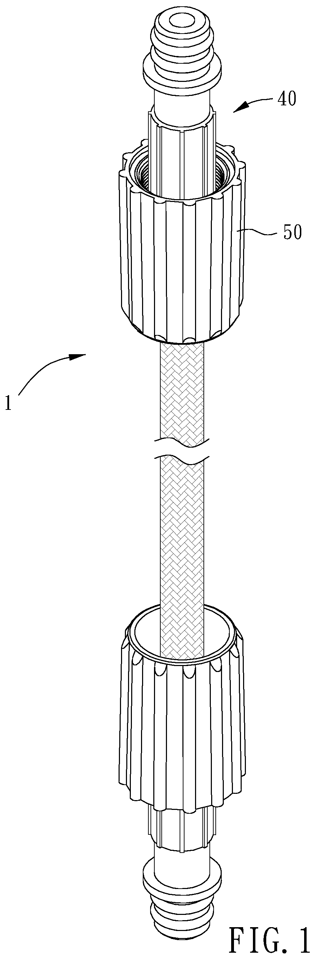

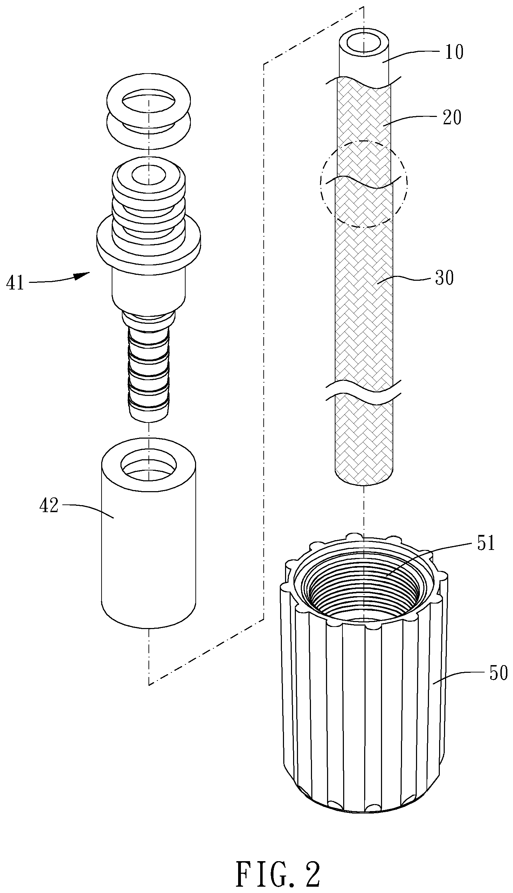

Please refer to Figs. 1 to 4 for a preferable embodiment of the present invention. A high-pressure hose 1 of the present invention includes an inner tube 10, a first braided layer 20 and a second braided layer 30.

The inner tube 10 defines an axial direction and a circumferential direction around the axial direction. The first braided layer 20 is sleeved around the inner tube 10 and includes a plurality of first braiding yarns 21 and a plurality of first imaginary axes 22 separately arranged in the circumferential direction. Each of the plurality of first imaginary axes 22 is passed through a plurality of first intersections 23 of the plurality of first braiding yarns 21. The second braided layer 30 is sleeved around the first braided layer 20 and includes a plurality of second braiding yarns 31 and a plurality of second imaginary axes 32 separately arranged in the circumferential direction. Each of the plurality of second imaginary axes 32 is passed through a plurality of second intersections 33 of the plurality of second braiding yarns 31. The plurality of first imaginary axes 22 are at least partially misaligned with the plurality of second imaginary axes 32 in a radial direction of the inner tube 10 so that the inner tube 10 is covered by at least one of the plurality of first intersections 23 and the plurality of second intersections 33 in the radial direction, which provides good pressure resistance, good flexibility and good wear-resistant.

Specifically, in a predetermined length of the high-pressure hose 1, a number of the plurality of first intersections 23 is less than a number of the plurality of second intersections 33; in the predetermined length of the high-pressure hose 1, at least 50% of the plurality of second intersections 33 is misaligned with the plurality of first intersections 23 in the radial direction. Understandably, a plurality of holes are defined between the plurality of first braiding yarns 21 and between the plurality of second braiding yarns 31 respectively arranged side by side, which results in relative week structural strength at these positions. With the plurality of first intersections 23 and the plurality of second intersections 33 alternatively arranged in the circumferential direction, the plurality of holes of one of the first braided layer 20 and the second braided layer 30 can be covered by said intersections of the other of the first braided layer 20 and the second braided layer 30, which provides structural reinforcement effect.

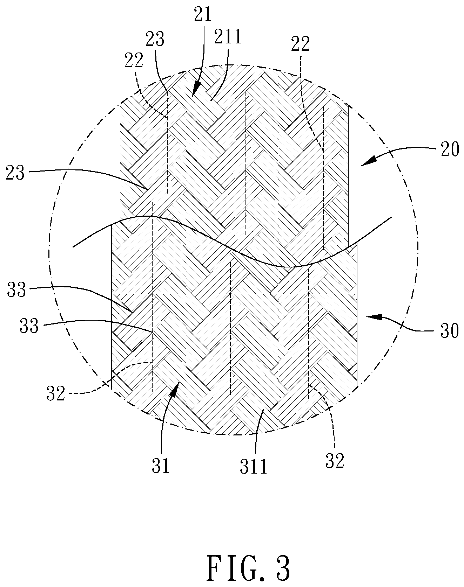

In this embodiment, each of the plurality of first imaginary axes 22 and each of the plurality of second imaginary axes 32 are parallel to the axial direction. In the radial direction, each of the plurality of first imaginary axes 22 is located between adjacent two of the plurality of second imaginary axes 32, as shown in figure 3. Therefore, when the high-pressure tube is expended due to internal fluid pressure, the first braided layer 20 and the second braided layer 30 provide uniform restriction force to the inner tube 10, and the high-pressure tube is not easy to deform and durable to use.

The inner tube 10 is made of thermoplastic polyurethane, which provides a range of working temperature between -20°C and 60°C and has good tensile strength, good flexibility, wear resistance. The plurality of first braiding yarns 21 and the plurality of second braiding yarns 31 are made of the same material. In this embodiment, a number of the plurality of first braiding yarns 21 is the same as a number of the plurality of second braiding yarns 31; the plurality of first braiding yarns 21 and the plurality of second braiding yarns 31 are made of polyester; each of the plurality of first braiding yarns 21 and each of the plurality of second braiding yarns 31 respectively include a plurality of filament fibers 211, 311; and each of the plurality of filament fibers 211, 311 is a 1500 denier or 3000 denier polyester fiber so as to provide sufficient structural strength, anti-cut effect and aging resistance. Preferably, a weight of the inner tube 10 is between 50-60 g/m, and a total weight of the first braided layer 20 and the second braided layer 30 is between 40-50 g/m. With the structure as described above, the high-pressure hose 1 can be used at a working pressure lager than 3000 psi. In other embodiments, the number of the plurality of first braiding yarns 21 may be different from the number of the plurality of second braiding yarns 31; the plurality of first braiding yarns 21 and the plurality of second braiding yarns 31 may be made of at least one of nylon, polypropylene, polyvinyl chloride or rubber.

In manufacturing, the first braided layer 20 and the second braided layer 30 are respectively made by a braiding machine with 48 carriers, and the second braided layer 30 directly contacts with the first braided layer 20 without any adhesive materials disposed therebetween, which is easy to manufacture. Therefore, the second braided layer 30 is at least partially movable relative to the first braided layer 20 so as to maintain flexibility of the high-pressure hose 1.

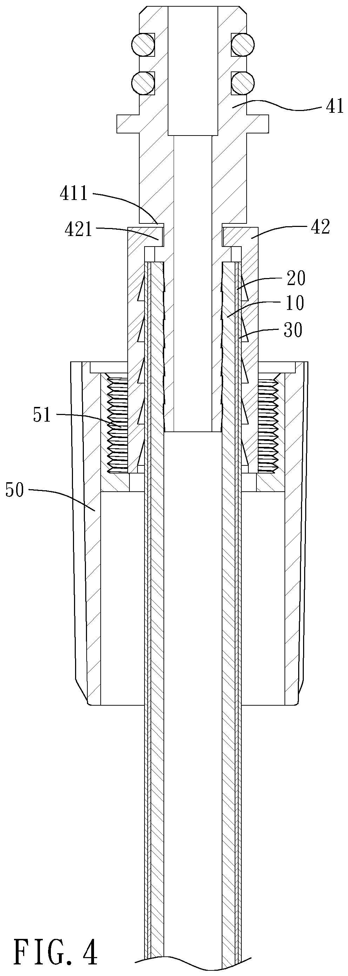

The high-pressure hose 1 further includes two connectors 40 disposed on two ends of the high-pressure hose 1, and each of the two connectors 40 includes a connecting head 41 and a sleeve member 42. Each said connecting head 41 is partially disposed within an end of the inner tube 10, and each said sleeve member 42 is sleeved on an outer surface of the second braided layer 30 and radially overlapped with one said connecting head 41 to clamp the inner tube 10, the first braided layer 20 and the second braided layer 30 therebetween, as shown in figure 4, which is convenient to be assembled. Moreover, each said connecting head 41 includes an annular recess 411, and each said sleeve member 42 includes an annular flange 421 engaged within one said annular recess 411 for stable assembling. The two connectors 40 are made of stainless steel, aluminum or copper so as to have good pressure resistance. Preferably, the high-pressure hose 1 further includes two connecting sleeve 50 moveably sleeved to the outer surface of the second braided layer 30, and each of the two connecting sleeve 50 has an inner threaded segment 51 so that each of the two connecting sleeve 50 can be screwed to an outer threaded segment of an object to be connected for stable connection. In other embodiments, one of the two connecting sleeve 50 may have the inner threaded segment, and the other of the two connecting sleeve 50 may have an outer threaded segment to meet different requirements.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A high-pressure hose (1), including:
an inner tube (10), defining an axial direction and a circumferential direction around the axial direction;
a first braided layer (20), sleeved around the inner tube (10), including a plurality of first braiding yarns (21) and a plurality of first imaginary axes (22) separately arranged in the circumferential direction, each of the plurality of first imaginary axes (22) passed through a plurality of first intersections (23) of the plurality of first braiding yarns (21); and
a second braided layer (30), sleeved around the first braided layer (20), including a plurality of second braiding yarns (31) and a plurality of second imaginary axes (32) separately arranged in the circumferential direction, each of the plurality of second imaginary axes (32) passed through a plurality of second intersections (33) of the plurality of second braiding yarns (31);
wherein the plurality of first imaginary axes (22) are at least partially misaligned with the plurality of second imaginary axes (32) in a radial direction of the inner tube (10).

2. The high-pressure hose (1) of claim 1, wherein each of the plurality of first imaginary axes (22) and each of the plurality of second imaginary axes (32) are parallel to the axial direction.

3. The high-pressure hose (1) of claim 1, wherein in the radial direction, each of the plurality of first imaginary axes (22) is located between adjacent two of the plurality of second imaginary axes (32).

4. The high-pressure hose (1) of claim 1, wherein in a predetermined length of the high-pressure hose (1), a number of the plurality of first intersections (23) is less than a number of the plurality of second intersections (33).

5. The high-pressure hose (1) of claim 4, wherein in the predetermined length of the high-pressure hose (1), at least 50% of the plurality of second intersections (33) is misaligned with the plurality of first intersections (23) in the radial direction.

6. The high-pressure hose (1) of claim 1, wherein the second braided layer (30) directly contacts with the first braided layer (20) and is at least partially movable relative to the first braided layer (20).

7. The high-pressure hose (1) of claim 1, wherein the inner tube (10) is made of thermoplastic polyurethane.

8. The high-pressure hose (1) of claim 1, wherein the plurality of first braiding yarns (21) and the plurality of second braiding yarns (31) are made of the same material.

9. The high-pressure hose (1) of claim 8, wherein the plurality of first braiding yarns (21) and the plurality of second braiding yarns (31) are made of polyester.

10. The high-pressure hose (1) of claim 1, wherein a weight of the inner tube (10) is between 50-60 g/m, and a total weight of the first braided layer (20) and the second braided layer (30) is between 40-50 g/m.

11. The high-pressure hose (1) of claim 1, further including two connectors (40) disposed on two ends of the high-pressure hose (1), wherein each of the two connectors (40) includes a connecting head (41) and a sleeve member (42), each said connecting head (41) is partially disposed within an end of the inner tube (10), and each said sleeve member (42) is sleeved on an outer surface of the second braided layer (30) and radially overlapped with one said connecting head (41) to clamp the inner tube (10), the first braided layer (20) and the second braided layer (30) therebetween.

12. The high-pressure hose (1) of claim 11, wherein each of the plurality of first imaginary axes (22) and each of the plurality of second imaginary axes (32) are parallel to the axial direction; in the radial direction, each of the plurality of first imaginary axes (22) is located between adjacent two of the plurality of second imaginary axes (32); in a predetermined length of the high-pressure hose (1), a number of the plurality of first intersections (23) is less than a number of the plurality of second intersections (33); in the predetermined length of the high-pressure hose (1), at least 50% of the plurality of second intersections (33) is misaligned with the plurality of first intersections (23) in the radial direction; the second braided layer (30) directly contacts with the first braided layer (20) and is at least partially movable relative to the first braided layer (20); the inner tube (10) is made of thermoplastic polyurethane; the plurality of first braiding yarns (21) and the plurality of second braiding yarns (31) are made of the same material; the plurality of first braiding yarns (21) and the plurality of second braiding yarns (31) are made of polyester; a number of the plurality of first braiding yarns (21) is the same as a number of the plurality of second braiding yarns (31); each of the plurality of first braiding yarns (21) and each of the plurality of second braiding yarns (31) respectively include a plurality of filament fibers (211, 311); each of the plurality of filament fibers (211, 311) is a 1500 denier or 3000 denier polyester fiber; the first braided layer (20) and the second braided layer (30) are respectively made by a braiding machine with 48 carriers; a weight of the inner tube (10) is between 50-60 g/m, and a total weight of the first braided layer (20) and the second braided layer (30) is between 40-50 g/m; each said connecting head (41) includes an annular recess (411), and each said sleeve member (42) includes an annular flange (421) engaged within one said annular recess (411); and the high-pressure hose (1) further includes two connecting sleeve (50) moveably sleeved to the outer surface of the second braided layer (30), and each of the two connecting sleeve (50) has an inner threaded segment (51).
